# EUROPÄISCHE PATENTSCHRIFT

(11) **EP 1 620 304 B1**
(45) Veröffentlichungstag und Bekanntmachung des Hinweises auf die Patenterteilung: **21.06.2006**
(21) Anmeldenummer: 04729623.1
(22) Anmeldetag: 27.04.2004
(51) Int. Cl.: B62D 15/02

(54) **VORRICHTUNG ZUR STEUERUNG EINER ZUGMASCHINE MIT EINER EINRICHTUNG ZUM ERFASSEN DES SCHWENK- UND KNICKWINKELS ZWISCHEN ZUGMASCHINE UND EINEM ANHÄNGER**
CONTROL DEVICE FOR A TRACTOR PROVIDED WITH A SYSTEM FOR DETECTING PIVOTING AND ARTICULATING ANGLES BETWEEN SAID TRACTOR AND A TRAILER
DISPOSITIF DE COMMANDE D'UN TRACTEUR COMPORTANT UN SYSTEME DE DETECTION DE L'ANGLE DE PIVOTEMENT ET D'ARTICULATION ENTRE LE TRACTEUR ET LA REMORQUE

(30) Priorität: 02.05.2003 DE 20306787 U
(43) Veröffentlichungstag der Anmeldung: 01.02.2006
(73) Patentinhaber: Georg Fischer Verkehrstechnik GmbH, 78221 Singen (DE)
(72) Erfinder: METTERNICH, Heinz-Rüdiger, 21079 Hamburg (DE); LÜDERS, Karsten, 21217 Seevetal (DE)
(74) Vertreter: Glaeser, Joachim
(86) Internationale Anmeldenummer: PCT/EP2004/004410
(87) Internationale Veröffentlichungsnummer: WO 2004/096623

(56) Entgegenhaltungen:
- EP-A- 0 361 166
- EP-A- 0 577 571
- DE-A- 19 964 045

## Beschreibung

Die Erfindung bezieht sich auf eine Vorrichtung zur Steuerung einer Zugmaschine mit einer Einrichtung zum Erfassen des Schwenk- oder Knickwinkels zwischen den geometrischen Längsmittelachsen der Zugmaschine und einem über einen Zugsattelzapfen angekuppelten Sattelanhänger beim Kuppeln und Aus- und Einparken des Sattelanhängers.

Es ist eine Vorrichtung zum Messen des Schwenkwinkels zwischen einer Sattelzugmaschine und einem an diese angekuppelten Sattelanhänger bekannt (EP0577571 A2). In der DE 4021717 A1 wird durch selbsttätiges Nachstellen der äußeren Rückspiegel der Sattelzugmaschine in Abhängigkeit vom Schwenkwinkel mittels einer Nachlaufregeleinrichtung ermöglicht, dass die bei einer Kurvenfahrt auf Seiten der Innenkurve liegende hintere Ecke des Sattelanhängers in dem zugehörigen Rückspiegel für den Fahrer der Sattelzugmaschine sichtbar bleibt. Hierzu wird ein mechanischer Drehwinkelgeber mit einem Messrad eingesetzt.

Die DE 36 11 469 A1 zeigt eine Vorrichtung zur berührungslosen Positionsmessung. Hierbei werden magnetoresistive Elemente, also elektrische Widerstände eingesetzt, die je nach auftreffendem äußeren Magnetfeld ihren Wert ändern. Diese Widerstände befinden sich auf einer Unterlage und sind in einer Art Brückenschaltung an eine Auswerteschaltung angeschlossen. Oberhalb dieser Widerstände bewegt sich nun ein Permanentmagnet und je nach Position wird ein entsprechender Einfluss auf die Widerstände ausgeübt. Widerstandsunterschiede können in der Auswerteschaltung erkannt werden, so dass eine Aussage über die Position des Magneten erhalten werden kann.

Nach der DE 199 64 045 A1 werden auf einer Zugmaschine und einem Anhänger auf Erdmagnetismus ansprechende Kompasse angeordnet und aus der Differenz der beiden Anzeigen soll ein Maß für den Winkel zwischen Zugmaschine und Anhänger ermittelt werden.

Bei der PS 33 30 387 C2 geht es um eine Sperrvorrichtung für den Knickwinkel zwischen einem Zugfahrzeug und einem Anhänger eines Straßen-Gelenkfahrzeuges. Um diesen Knickwinkel zu begrenzen, muss er in seiner Größe erfasst werden. Dies geschieht mit Hilfe einer gelochten Codescheibe, an deren einer Seite Lichtquellen und an deren anderer Seite Fotozellen angeordnet sind.

Bei der DE 199 64 059 A1 ist die Sattelplatte einer Zugmaschine mit einem Magnetfeldsensor ausgerüstet. Wenn der Königszapfen des Anhängers in der Sattelplatte Aufnahme findet, soll ein Permanentmagnet an dem frei vorstehenden Ende des Königszapfens haften bleiben. Über den Magnetfeldsensor kann ein magnetisches Feld ausgemessen werden und um einen Knickwinkel zu bestimmen, müssen zuvor eine Reihe von Winkellagen eingestellt und ausgemessen werden, was einem Einsatz in der Praxis entgegensteht.

Die vorliegende Erfindung befasst sich mit Problemen, die regelmäßig dann auftreten, wenn Anhänger - seien sie nun mit einem Container beladen oder nicht - an einer Zugmaschine angekoppelt werden sollen. Hierbei ist zu berücksichtigen, dass die Anhänger dicht nebeneinander stehen, so dass ein problemloser Abtransport nur dann möglich ist, wenn beim Ankuppeln und Ausparken die geometrischen Längsmittelachsen der Zugmaschine und des Anhängers miteinander fluchten. Dies ist allerdings ein Ausnahmefall. In der Praxis ist oft zu berücksichtigen, dass die Zugmaschine gerade diese Lage nicht einnehmen kann, weil in dem Bereich vor dem Anhänger nicht genügend Platz zur Verfügung steht, um Anhänger und Zugmaschine in diese ideale Ausrichtungslage zu bringen.

Die Erfindung befasst sich weiterhin mit den Problemen, die dann auftreten, wenn sowohl der Kupplungsvorgang als auch das Ausrangieren eines Anhängers automatisch durchgeführt werden sollen, d.h., dass die Zugmaschine unbemannt ist und über eine Fernsteuerung betätigt wird. Ein erfahrener Kraftfahrer kann je nach dem Winkel, in dem Zugmaschine und Anhänger zueinander stehen, sein Fahrzeug geeignet steuern, also so, wie dies der Winkel und die Umgebungsverhältnisse zulassen. Eine automatische Steuerung braucht unbedingt eine zusätzliche Stellungsinformation, und zwar in einer solchen Form, dass diese in einer Datenverarbeitungseinrichtung auch verwertet werden kann.

Die vorangehend geschilderten Probleme sollen durch die vorliegende Erfindung bewältigt werden, was erreicht wird durch eine Anordnung 20 einer Mehrzahl von nebeneinander liegenden Hallsensoren 21 in einem Bereich, der die Aufnahmeöffnung 11 der Zugmaschine für den Zugsattelzapfen konzentrisch auf einem Teilkreisbogen um die geometrische Vertikalmittelachse der Aufnahmeöffnung umgibt; durch mindestens einen Permanentmagneten 30, der unten am Sattelanhänger in einem solchen Radialabstand rₘ von der geometrischen Vertikalachse 13 des Zugsattelzapfens und mit Abstand zu den Hallsensoren angeordnet ist, dass er mit seinem Magnetfeld lediglich auf den engst benachbarten Hallsensor der Anordnung einwirkt, und durch elektrische mit einer Auswertschaltung verbundene Ausgangsleitungen der Hallsensoren 21, die ihrerseits aus der Lage des erregten Hallsensors den gesuchten Winkel α ermittelt.

Bei dieser ersten Ausführungsform der Erfindung geht es um das Ankoppeln eines Sattelanhängers, wobei der Zugsattelzapfen oder Königszapfen in eine Sattelplatte der Sattelzugmaschine eingebracht wird.

Bei einer zweiten Ausführungsform der Erfindung ist eine Vorrichtung der eingangs genannten Art gekennzeichnet durch eine Anordnung einer Mehrzahl von nebeneinander liegenden Hallsensoren in einem Bereich, der die vertikale geometrische Schwenkachse der Deichsel konzentrisch umgibt; durch mindestens einen Permanentmagneten, der unten am Anhänger in einem solchen Radialabstand von der geometrischen Vertikalschwenkachse und mit Abstand zu den Hallsensoren angeordnet ist, dass er mit seinem Magnetfeld lediglich auf den engst benachbarten Hallsensor der Anordnung einwirkt, und durch elektrische mit einer Auswertschaltung verbundene Ausgangsleitungen der Hallsensoren, die ihrerseits aus der Lage des erregten Hallsensors den gesuchten Winkel α ermittelt.

Bei dieser zweiten Ausführungsform der Erfindung geht es darum zu erfassen, wie eine Deichsel eines Deichselanhängers relativ zu seiner geometrischen Längsmittelachse steht. Hierzu wird eine Anordnung von Hallsensoren ähnlich eingesetzt, wie bei der ersten Ausführungsform der Erfindung. Anstelle der vertikalen Mittelachse der Sattelplatte bzw. des Zugsattelzapfens tritt hier die vertikale geometrische Achse der Deichsel in Bezug auf die geometrische Längsmittelachse des Anhängers.

Bei einer dritten Ausführungsform der Erfindung werden in entsprechender Weise beide Winkel erfasst, die beim Ankuppeln oder Abkuppeln eine Rolle spielen können. Es geht um den Knickwinkel zwischen der geometrischen horizontalen Längsachse der Deichsel des Anhängers zu der geometrischen Längsmittelachse der Zugmaschine und darüber hinaus geht es um den Winkel zwischen der Deichsel in Bezug auf die geometrische Längsmittelachse des Anhängers.

Im Betrieb von unbemannten Fahrzeugen sind diese beiden Winkel von besonderer Bedeutung. Nur wenn diese Winkel erfasst werden, kann ein Kupplungsvorgang und der darauf folgende Anfahrvorgang ohne Unterstützung durch Personal durchgeführt werden.

Durch geeignete geometrische Zuordnung zwischen einem Permanentmagneten und den Hallsensoren kann erreicht werden, dass nur ein bestimmter Hallsensor eines Sensorbereichs erregt wird und ein entsprechendes elektronisches Signal in digitaler Form abgibt. Durch eine geeignete Matrixverschaltung der Ausgänge kann der entsprechende Sensor, und damit der zugehörige Winkel zu einer Bezugsstellung ermittelt werden und als Stellgröße für die Rangierbewegungen der Zugmaschine eingesetzt werden. Diese Eingangsdaten stehen mit einer hinreichend großen geometrischen und zeitlichen Auflösung zur Verfügung, so dass präzise Fahrbewegungen durchgeführt werden können, insbesondere, wenn die Zugmaschine über Satellit geführt wird.

Die Erfindung wird nachstehend anhand der Zeichnungen beispielsweise erläutert.
- Figur 1: zeigt eine Draufsicht auf die Sattelplatte einer Sattelzugmaschine in einer der Ausführungsformen der Erfindung.
- Figur 2: zeigt einen Teilradialschnitt in einer durch den Mittelpunkt der Aufnahmeöffnung der Sattelplatte und einen Hallsensor gehenden Ebene in vergrößertem Maßstab.

In den Figuren ist eine Sattelplatte 10 mit einer Aufnahmeöffnung 11 gezeigt, so wie diese Sattelplatten derzeit beim Transport von Containern mittels Sattelzugmaschine und Sattelanhänger eingesetzt werden.

Die Aufnahmeöffnung 11 weist eine vertikale geometrische Achse 13 auf. Weiterhin sind die Sattelplatte 10 und die Aufnahmeöffnung 11 symmetrisch zu der geometrischen Längsmittelachse 12 der Sattelzugmaschine ausgebildet.

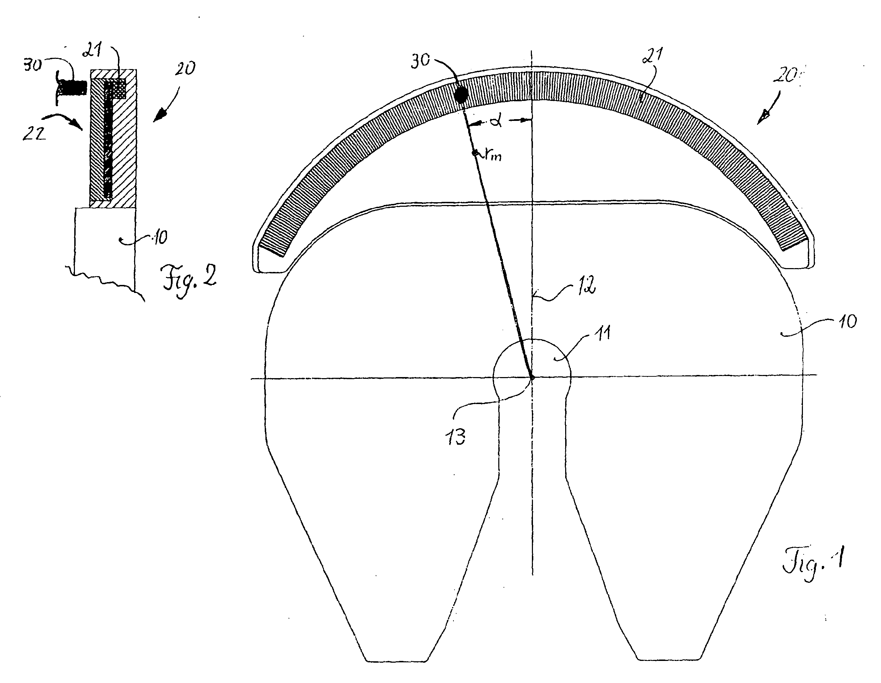

Der Sattelanhänger selbst ist nicht gezeigt, es ist jedoch zu erkennen, dass der Sattelanhänger zur Sattelplatte 10 und damit zur Sattelzugmaschine dann fluchtend ausgerichtet ist, wenn die beiden geometrischen Längsmittelachsen auf der Linie 12 der Figur 1 zusammenfallen.

Im Wesentlichen zentrisch zur vertikalen geometrischen Achse 13 ist eine Sensoranordnung 20 gezeigt. Diese Sensoranordnung 20 besteht aus einer Vielzahl von Hallsensoren 21, deren mittige Anordnung mit einem Halbkreisbogen mit dem Radius rₘ um die vertikale geometrische Achse 13 zusammenfällt.

In Figur 1 ist mit 30 ein Permanentmagnet bezeichnet, der - wie dies aus Figur 2 zu erkennen ist - oberhalb der Anordnung 20 der Hallsensoren 21 in einem geringen Abstand angeordnet ist. Der Magnet 30 ist im unteren Bereich des Sattelanhängers und auf einem Kreisbogen mit dem Radius rₘ um die vertikale geometrische Achse 13 beweglich angeordnet. Er ist zu dem nicht gezeigten Sattelzugzapfen zentrisch. Im gekuppelten Zustand fällt die geometrische vertikale Achse des Sattelzugzapfens mit der geometrischen vertikalen Achse 13 der Sattelplatte 10 zusammen.

Die Figur 2 ist nicht genau maßstabstreu zur Figur 1, zeigt aber, wie die Hallsensoren 21 in einem Träger eingebettet und nach außen hin durch eine geeignete Vergussmasse 22 mechanisch geschützt sind, wobei das Magnetfeld des Permanentmagneten 30 mit jedem der Hallsensoren 21 ohne Weiteres in Wechselwirkung treten kann.

In der Figur 1 ist der Permanentmagnet 30 mit einem Winkel α zur geometrischen Längsmittelachse 12 der Sattelzugmaschine gezeigt, d.h., dass im eingekuppelten Zustand die Längsmittelachse des Sattelanhängers um diesen Winkel von der Achse 12 abweicht.

Die nicht gezeigte Auswertschaltung bekommt also von dem entsprechend erregten Hallsensor ein Signal und dieses wiederum entspricht dem Verstellwinkel α. Dieser Winkel kann nun bei den Anfahrbewegungen der Sattelzugmaschine berücksichtigt werden.

Mit den heutzutage im Handel erhältlichen Hallsensoren lassen sich Winkelschritte von einem halben Grad verwirklichen. Es können 200 digitale Impulse pro Sekunde für die Steuerung zur Verfügung gestellt werden.

Der Bereich 20 sollte sich winkelmäßig zwischen 90° und 130° erstrecken, wobei selbst Winkel bis zu 180° bei der Anordnung der Hallsensoren möglich wären. Praktisch treten derartig große Schwenkwinkel zwischen Zugmaschine und Anhänger nicht auf und wären in der Nähe von 180° beim Anfahren nicht mehr zu bewältigen.

Bei einer geometrischen Anordnung mit 0,5°-Schritten lassen sich Ungenauigkeiten gut kompensieren, die auftreten könnten, wenn die geometrische vertikale Achse des Zugsattelzapfens nicht mit der der Aufnahmeöffnung 11 der Sattelplatte 10 übereinstimmt.

Für die zweite Ausführungsform der Erfindung, die in den Figuren nicht gezeigt worden ist, gilt entsprechendes. Die geometrische vertikale Achse der Deichsel entspricht der vertikalen Achse 13. Der Radius der Hallanordnung 20 wird so gewählt, dass er die Deichselhalterung am Hängerfahrzeug mit geringem radialen Abstand umgibt.

Bei der dritten Ausführungsform der Erfindung sind zwei Hallsensoren an den entsprechenden Stellen vorgesehen, die auf eine gemeinsame Auswertschaltung einwirken und die ermittelten Winkel angeben.

## Patentansprüche

1. Vorrichtung zur Steuerung einer Zugmaschine mit einer Einrichtung zum Erfassen des Schwenk- oder Knickwinkels zwischen den geometrischen Längsmittelachsen der Zugmaschine und derjenigen eines über einen Zugsattelzapfen angekuppelten Sattelanhängers beim Kuppeln und Aus- und Einparken des Sattelanhängers, **gekennzeichnet**
**durch** eine Anordnung (20) einer Mehrzahl von nebeneinander liegenden Hallsensoren (21) in einem Bereich, der die Aufnahmeöffnung (11) der Zugmaschine für den Zugsattelzapfen konzentrisch auf einem Teilkreisbogen um die geometrische Vertikalmittelachse der Aufnahmeöffnung umgibt;
**durch** mindestens einen Permanentmagneten (30), der unten am Sattelanhänger in einem solchen Radialabstand (rₘ) von der geometrischen Vertikalachse (13) des Zugsattelzapfens und mit Abstand zu den Hallsensoren angeordnet ist, dass er mit seinem Magnetfeld lediglich auf den engst benachbarten Hallsensor der Anordnung einwirkt, und
**durch** elektrische mit einer Auswertschaltung verbundene Ausgangsleitungen der Hallsensoren (21), die ihrerseits aus der Lage des erregten Hallsensors den gesuchten Winkel (α) ermittelt.

2. Vorrichtung zur Steuerung einer Zugmaschine mit einer Einrichtung zum Erfassen des Schwenk- oder Knickwinkels zwischen den geometrischen Längsmittelachsen einer Deichsel und derjenigen eines über die Deichsel ankuppelbaren Anhängers beim Kuppeln und Aus- und Einparken des Anhängers, **gekennzeichnet**
**durch** eine Anordnung (20) einer Mehrzahl von nebeneinander liegenden Hallsensoren (21) in einem Bereich, der die vertikale geometrische Schwenkachse der Deichsel konzentrisch umgibt;
**durch** mindestens einen Permanentmagneten (30), der unten am Anhänger in einem solchen Radialabstand (rₘ) von der geometrischen Vertikalschwenkachse (13) und mit Abstand zu den Hallsensoren angeordnet ist, dass er mit seinem Magnetfeld lediglich auf den engst benachbarten Hallsensor der Anordnung einwirkt, und
**durch** elektrische mit einer Auswertschaltung verbundene Ausgangsleitungen der Hallsensoren (21), die ihrerseits aus der Lage des erregten Hallsensors den gesuchten Winkel (α) ermittelt.

3. Vorrichtung nach Anspruch 1 und/oder Anspruch 2, **dadurch gekennzeichnet, dass** die Auswertschaltung den und/oder die Winkel einer Fernsteuereinrichtung für eine unbemannte Zugmaschine als Eingangsgröße bzw. -größen zuführt.

## Claims

1. Device for the control of a tractor comprising a means for detecting the pivoting or articulating angle between the geometrical longitudinal centrelines of the tractor and those of a semi-trailer coupled thereto by means of a king pin, during coupling and parking as well as leaving a parking position of the semi-trailer, **characterised**
**by** an arrangement (20) of a plurality adjacently located Hall sensors (21) in an area surrounding the receiving opening (11) of the tractor for the king pin concentrically on a pitch arc around the geometrical vertical centreline of the receiving opening;
by at least one permanent magnet (30) arranged beneath at the semi-trailer in such a radial distance (rₘ) from the geometrical vertical axis (13) of the king pin and distanced from the Hall sensors such that its magnetic field only effects the most closely adjacent Hall sensor of the arrangement, and
by electrical output lines of the Hall sensors (21) connected with an evaluation circuit, which in turn detects the searched angle (α) based on the position of the excited Hall sensor.

2. Device for the control of a tractor comprising a means for detecting the pivoting or articulating angle between the geometrical longitudinal centrelines of a drawbar and those of a trailer, which can be coupled by means of the drawbar, during coupling and parking and leaving a parking position of the trailer, **characterised**
**by** an arrangement (20) of a plurality adjacently located Hall sensors (21) in an area concentrically surrounding the vertical geometrical axis of rotation of the drawbar; by at least one permanent magnet (20) arranged beneath at the trailer in such a radial distance (rₘ) from the geometrical vertical axis of rotation (13) and distanced from the Hall sensors such that its magnetic field only affects the most closely adjacent Hall sensor of the arrangement, and
by electrical output lines of the Hall sensors (21) connected with an evaluation circuit, which in turn detects the searched angle (α) based on the position of the excited Hall sensor.

3. Device according to claim 1 and/or claim 2, **characterised in that** the evaluation circuit supplies the angle and/or the angles to a remote control device for an unmanned tractor as input value or values, respectively.

## Revendications

1. Dispositif de commande de tracteur comportant un système de détection de l'angle de pivotement ou d'articulation entre les axes géométriques médians longitudinaux du tracteur et d'une remorque semi-portée attelée par un pivot d'accouplement lors de l'attelage et du déboîtement pour prendre ou quitter un stationnement de la remorque semi-portée, **caractérisé par**
- un agencement (20) de plusieurs capteurs à effet Hall (21) disposés les uns à côté des autres dans une zone qui entoure l'ouverture réceptrice (11) dans le tracteur (11) destinée à recevoir le pivot d'accouplement sur un arc de cercle partiel concentrique à l'axe géométrique médian vertical de l'ouverture réceptrice (11),
- au moins un aimant permanent (30) disposé sous la remorque semi-portée à une distance radiale (rₘ) telle de l'axe géométrique vertical du pivot d'accouplement et à une distance telle des capteurs à effet Hall que son champ magnétique ne produise de l'effet que sur le capteur à effet Hall le plus proche, et
- des lignes électriques de sortie des capteurs à effet Hall (21) reliées à un circuit d'évaluation qui détermine l'angle recherché (α) à partir de la position du capteur à effet Hall excité.

2. Dispositif de commande de tracteur comportant un système de détection de l'angle de pivotement ou d'articulation entre les axes géométriques médians longitudinaux d'un timon et d'une remorque attelée par ledit timon lors de l'attelage et du déboîtement pour prendre ou quitter un stationnement de la remorque, **caractérisé par**
- un agencement (20) de plusieurs capteurs à effet Hall (21) disposés les uns à côté des autres dans une zone qui entoure de manière concentrique l'axe géométrique vertical de pivotement du timon,
- au moins un aimant permanent (30) disposé sous la remorque à une distance radiale (rₘ) telle de l'axe géométrique vertical de pivotement (13) et à une distance telle des capteurs à effet Hall que son champ magnétique ne produise de l'effet que sur le capteur à effet Hall le plus proche,
- des lignes électriques de sortie des capteurs à effet Hall (21) reliées à un circuit d'évaluation qui détermine l'angle recherché (α) à partir de la position du capteur à effet Hall excité.

3. Dispositif selon les revendication 1 et/ou 2 **caractérisé en ce que** le circuit d'évaluation transmet le et/ou les angles en tant que valeur(s) d'entrée à un dispositif de commande à distance d'un tracteur sans conducteur.
